# EUROPEAN PATENT APPLICATION

(11) **EP 3 738 727 A1**
(43) Date of publication of application: **18.11.2020**
(21) Application number: 18909936.9
(22) Date of filing: 29.10.2018
(51) Int. Cl.: B25J 13/08, B25J 19/02, G01B 11/00, G01B 11/24

(54) **PICKING SYSTEM AND END EFFECTOR FOR ROBOT ARM**

(30) Priority: 14.03.2018 JP 2018047141
(71) Applicant: KABUSHIKI KAISHA TOSHIBA, Minato-ku Tokyo 105-0023 (JP); Toshiba Infrastructure Systems & Solutions Corporation, Kawasaki-shi, Kanagawa 212-0013 (JP)
(72) Inventor: SEKIGUCHI, Kana, Kawasaki-shi, Kanagawa (JP); SHIMOYAMA, Kenichi, Kawasaki-shi, Kanagawa (JP)
(74) Representative: Horn Kleimann Waitzhofer Patentanwälte PartG mbB
(86) International application number: PCT/JP2018/040118
(87) International publication number: WO 2019/176158

(57) **Abstract**

This end effector is provided with a gripping mechanism that is provided at an arm tip part of a robot arm for picking an article, and that grips the article in a releasable manner, and a detected part that is disposed on the boundary between the article and the gripping mechanism or in the vicinity of the boundary, and that is irradiated with incident light from a distance detector that detects the distance to an object on the basis of an optical property of reflected light with respect to the irradiated incident light. In the detected part, a detection value group which indicates a detection result of the distance to the detected part detected by the distance detector has a different optical property than a detection value group which indicates the distance to the article detected by the distance detector.

## Description

### Technical Field

Embodiments described herein relate generally to a picking system configured to carry out picking of an article by means of various manipulators (robot arms) and end effector of a robot arm to be used in the picking system.

### Background Art

A robot arm is provided with an end effector corresponding to the use application or service at an arm apical end section thereof. The end effector includes, as a mechanism (gripping mechanism) configured to grip an article at the time of picking, a suction-attracting mechanism or the like configured to carry out suction-attraction and release of an article by means of, for example, air. It should be noted that gripping is a concept comprehending the whole of holding modes of articles including not only suction-attraction but also pinching or the like. Accordingly, the gripping mechanism is sometimes configured as a pinching mechanism or the like configured to carry out pinching and release of an article by means of a plurality of fingers (claws).

For example, when an article is picked up from a collection area and is moved to a desired area, the article which is the object of picking is selected on the basis of the collection modes of the article group detected by an article detecting section such as a camera or sensor. The selected article (hereinafter referred to as a selected article) is gripped by the end effector of the robot arm and is moved from the collection area to the desired area.

### Citation List

### Patent Literatures

Patent Literature 1: JP 2011-212818 A
Patent Literature 2: JP 2012-051080 A
Patent Literature 3: JP 2009-056513 A

### Summary of Invention

### Technical Problem

Here, when the article group includes a wide variety of articles, various articles are gripped by the end effector. Further, there is a possibility of an article (hereinafter referred to as a gripped article) actually gripped being different from the selected article.

For this reason, in a step subsequent to the step in which the article has been gripped, estimation of the gripped article is carried out in order to move the gripped article to an appropriate place or release the article at an appropriate height. In order to estimate the gripped article, for example, a surface shape, size or the like of the gripped article is detected, and the detection data is compared (matched) with the master data of the articles included in the article group. The master data is an aggregate of data items obtained by previously detecting surface shapes, sizes and the like of the articles included in the article group. Accordingly, in order to quickly and efficiently carry out estimation of the gripped article, it is expedient that the matching range (search range) in which the detection data and master data are matched with each other be narrower.

Thus, a picking system and end effector of a robot arm which make it possible to narrow down the matching range of the detection data at the time of estimation of a gripped article are provided.

### Solution to Problem

An end effector of an embodiment comprises: a gripping mechanism attached to an arm apical end section of a robot arm configured to carry out picking of an article, and configured to grip the article in a releasable manner; and a to-be-detected section arranged at a boundary between the article and the gripping mechanism or in the vicinity of the boundary and is irradiated with incident light from a distance detector configured to detect a distance from itself to an object on the basis of optical characteristics of reflected light corresponding to the irradiated incident light, wherein regarding the to-be-detected section, a detection value group indicating a detection result of a distance from the distance detector to the to-be-detected section to be detected by the distance detector possesses optical characteristics different from a detection value group indicating a distance from the distance detector to the article to be detected by the distance detector.

### Brief Description of Drawings

FIG. 1 is a schematic view showing the configuration of a picking system of an embodiment.
FIG. 2 is a block diagram showing the configuration of the picking system of the embodiment.
FIG. 3 is a control flow chart of an arm control section and detector control section in the picking system of the embodiment.
FIG. 4 is a schematic view showing the configuration of an end effector in the picking system of the embodiment and example of a mode of detection of distance data carried out by a distance detector.
FIG. 5 is a view showing an acquired result (time transition of distance data value) of distance data at the distance detector corresponding to the reflection modes of incident light (laser light) shown in FIG. 4 in the picking system of the embodiment.
FIG. 6 is a schematic view showing the configuration of an end effector in the picking system of a comparative example and example of a mode of detection of distance data carried out by a distance detector.
FIG. 7 is a view showing an acquired result (time transition of distance data value) of distance data at the distance detector corresponding to the reflection modes of incident light (laser light) shown in FIG. 6 in the picking system of the comparative example.
FIG. 8 is a schematic view showing the configuration of an end effector in the picking system of a first modification example of the embodiment and mode of detection of distance data carried out by a distance detector.
FIG. 9 is a view showing an acquired result (time transition of distance data value) of distance data at the distance detector corresponding to the reflection modes of incident light (laser light) shown in FIG. 8 in the picking system of the first modification example.
FIG. 10 is a schematic view showing the configuration of an end effector in the picking system of a second modification example of the embodiment and mode of detection of distance data carried out by a distance detector.
FIG. 11 is a view showing an acquired result (time transition of distance data value) of distance data at the distance detector corresponding to the reflection modes of incident light (laser light) shown in FIG. 10 in the picking system of the second modification example.

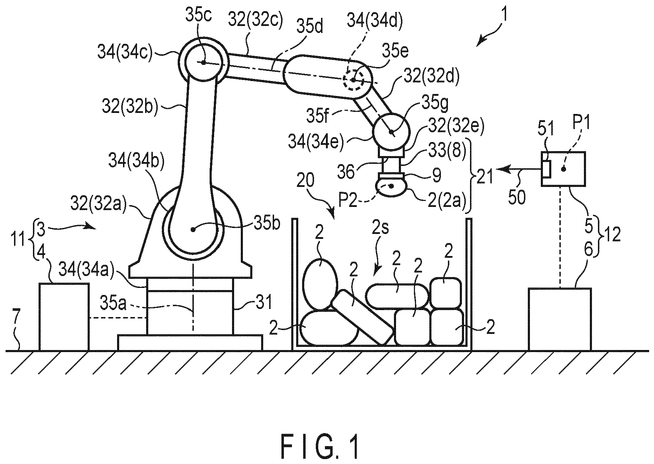

Mode for Carrying Out the Invention Hereinafter an article picking system of an embodiment and end effector of a manipulator (hereinafter referred to as a robot arm) to be used in the picking system will be described with reference to FIGS. 1 to 11.

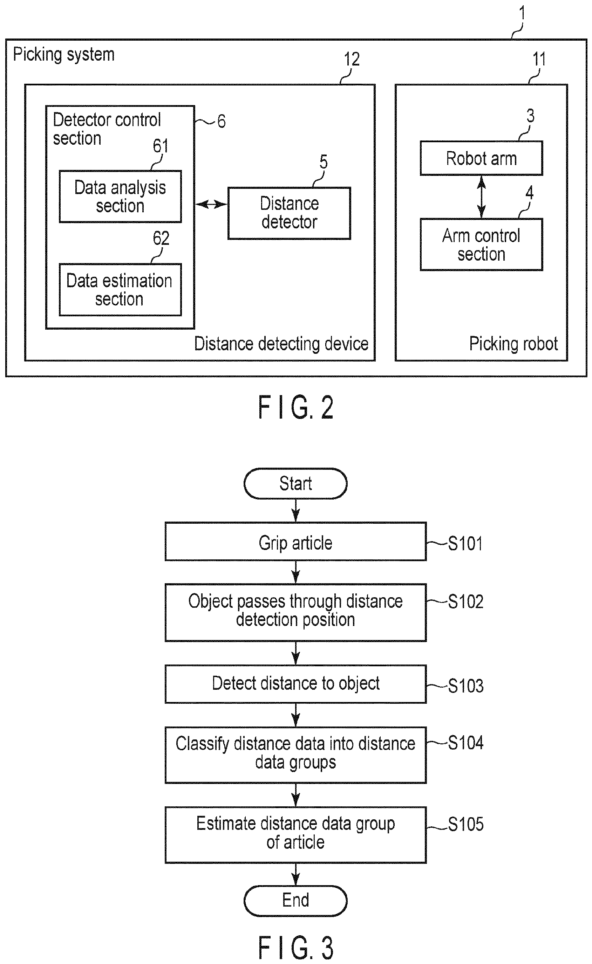

In FIG. 1 and FIG. 2, the configuration of the picking system of this embodiment is shown. FIG. 1 is a schematic view of a picking system 1. FIG. 2 is a block diagram of the picking system 1. As shown in FIG. 1 and FIG. 2, the picking system 1 is configured to include a picking robot 11 and distance detecting device 12. The picking robot 11 is a robot configured to carry out picking of an article 2 and is configured to include a robot arm 3 and arm control section 4. The distance detecting device 12 is a device configured to acquire and analyze the data of a distance from itself to an object 21 including the article 2 picked by the picking robot 11 and is configured to include a distance detector 5 and detector control section 6. In this embodiment, although the picking robot 11 and distance detecting device 12 respectively have separate configurations, these configurations may also be integrated.

The robot arm 3 carries out picking of the articles 2 collected in the collection area 20 and moves the picked article 2 from the collection area 20 to a desired area (hereinafter referred to as a move destination area). The article 2 is a concrete object which can be an object of picking such as baggage including a home-delivered article, package, postal matter, and the like, various parts, products, and the like. A case where the figures (sizes, shapes, weight values, packed states, and the like) of the article 2 are not uniform and diversified is assumed.

As shown in FIG. 1, the robot arm 3 is configured to include a base stand section 31, arm section 32, and end effector 33.

The base stand section 31 is installed on an installation surface 7. In this embodiment, the base stand section 31 is positioned and fixed on a floor surface identical to that of the collection area 20 by using the floor surface as the installation surface 7. It should be noted that the base stand section 31 may also be made movable on the floor surface without being positioned and fixed as described above. For example, a configuration in which the base stand section 31 is supported in such a manner that the base stand section 31 can be slid along a guide rail laid on the floor surface can also be employed. Thereby, it becomes possible to move the robot arm 3 with respect to the floor surface.

The arm section 32 extends from the base end section that is a part at which the arm section 32 is connected to the base stand section 31 to the top in such a manner that arm members are coupled to each other by means of a plurality of articulation sections 34. The arm section 32 is divided into a plurality of arm members by the articulation sections 34. The parts 32a to 32e are coupled to each other in sequence from the base stand section 31 by the predetermined articulation sections 34a to 34e and are respectively made rotatable around predetermined axes 35a to 35g. In this embodiment, in the arm section 32, the five parts 32a to 32e are coupled to each other by means of the five articulation sections 34a to 34e and respectively rotate around the seven axes 35a to 35g. However, the configuration of the arm section 32 is not limited to this.

The end effector 33 is detachably attached to the apical end (arm apical end section 36) of the arm section 32 and is made rotatable around the axis 35g together with the part (fifth part) 32e of the arm section 32. Further, the end effector 33 is configured to be attachable/detachable to/from the arm apical end section 36 and various types different from each other in size, shape, and the like are applied according to the articles 2 to be picked. The detailed configuration of the end effector 33 will be described later.

The arm section 32 and end effector 33 are rotated around the axes 35a to 35g by means of control motors (illustration omitted). Thereby, the arm section 32 is made to assume a desired posture with respect to the base stand section 31 and is freely displaced (operated) within a predetermined range. In the predetermined range (i.e., range of movement), the collection area 20 of the articles 2 and move destination area are included. Accordingly, by making the arm section 32 and end effector 33 rotate around the axes 35a to 35g, it becomes possible to displace these members with respect to the collection area 20 and move destination area.

It should be noted that the robot arm 3 is not limited to the configuration in which the robot arm 3 is controlled to operate around the seven axes 35a to 35g as in the case of this embodiment, and a configuration in which the robot arm 3 is controlled to operate around six or less axes or around eight or more axes may also be employed.

The arm control section 4 controls the robot arm 3. The arm control section 4 is configured to include, for example, a CPU, memory, input/output circuit, timer, and the like. The arm control section 4 reads various data items by means of the input/output circuit, carries out a mathematical operation by means of the CPU by using a program read from the memory, and carries out control based on a result of the mathematical operation. In this embodiment, the arm control section 4 is connected to the robot arm 3 including the end effector 33 by wire or wirelessly and transmits/receives various data items, results of mathematical operations, and the like to/from these members. Thereby, the arm control section 4 reads, for example, detection data of the collection state of the article group 2s in the collection area 20 by means of the input/output circuit, carries out a mathematical operation by means of the CPU by using a program read from the memory, and controls the operations of the robot arm 3 and end effector 33 on the basis of a result of the mathematical operation. It should be noted that in this embodiment, although the arm control section 4 has a configuration independent of the detector control section 6, these members 4 and 6 may also have an integrated configuration.

The distance detector 5 detects (measures) a distance from itself to each of the members of the object 21 including the article 2 picked by the robot arm 3. In this embodiment, light is applied as a detection medium of the distance detector 5. Accordingly, the distance detector 5 radiates incident light 50 toward the object 21 and measures the distance from itself to the object 21 on the basis of the time elapsed from radiation of the incident light 50 to reception of light reflected from the object 21.

The object 21 is a physical body capable of receiving incident light 50 from the distance detector 5 and includes the end effector 33 (gripping mechanism 8 to be described later), to-be-detected section 9 (to be described later), and air in addition to the picked article 2. As the distance detector 5, a laser range finder (LRF) configured to oscillate and radiate laser light, and perceive the laser light bouncing back from the object 21 is applied as an example. Although it is sufficient if the laser light serving as the incident light 50 is infrared laser light, it is also sufficient if the incident light 50 is laser light such as visible light, ultraviolet light, X-ray, and the like.

The distance detector 5 detects (measures) a distance from itself to the object 21 on a movement locus of the article 2 picked by the robot arm 3 to be obtained after the robot arm 3 has carried out picking of the article 2. In this embodiment, as an example, the distance detector 5 is fixed at an arbitrary position (position P1 shown in FIG. 1 as an example, and referred to as a reference position P1 hereinafter) at which the object 21 passing through any position on the aforementioned movement locus and laser light radiation perceiving section 51 can be opposed to each other. That is, the distance detector 5 detects the distance from itself to the object 21 at such timing that the object 21 just passes through a distance detection position (as an example, position P2 shown in FIG. 1 referred to as a distance detection position P2 hereinafter) which is a definite point on the movement locus.

At that time, the distance detector 5 radiates the incident light 50 throughout a predetermined length on a straight line intersecting the direction of movement of the object 21. In this embodiment, as an example, the distance detector 5 linearly radiates the incident light 50 in one direction on the horizontal plane perpendicular to the direction of movement (vertical direction) of the object 21. Then, the object 21 is moved along the movement locus, whereby the distance detector 5 carries out planar scanning (distance detection) of the surface of the object 21 throughout a predetermined range. As described above, in this embodiment, although the distance detector 5 is positioned to and fixed at the reference position P1 and, in this state, the object 21 is moved, the distance from the distance detector 5 to the object 21 may also be detected by moving the distance detector 5 and immobilizing the object 21. Alternatively, both the distance detector 5 and object 21 may be moved. Then, the distance detector 5 detects the distance from itself to the object 21 on the basis of the optical characteristics of the reflected light corresponding to the radiated incident light 50.

The detector control section 6 controls the distance detector 5. The detector control section 6 is configured to include, for example, a CPU, memory, input/output circuit, timer, and the like. The detector control section 6 reads various data items by means of the input/output circuit, carries out a mathematical operation by means of the CPU by using a program read from the memory, and carries out control based on a result of the mathematical operation. In this embodiment, the detector control section 6 is connected to the distance detector 5 by wire or wirelessly and transmits/receives various data items, results of mathematical operations, and the like to/from the distance detector 5.

The detector control section 6 operates the distance detector 5 and, at the same time, classifies the detection values detected by the distance detector 5 into a detection value group of the article 2 and detection value groups of members other than the article 2 on the basis of a detection value group of the to-be-detected sections 9 to be described later. The detection value group is a time-series aggregate of detection values acquired within a predetermined detection time. In order to execute such processing, the detector control section 6 is configured to include a data analysis section 61 and data estimation section 62. The data analysis section 61 and data estimation section 62 are stored in a memory as, for example, programs. In this embodiment, the detector control section 6 reads a detection value (distance data) of the distance detector 5 by means of the input/output circuit, carries out a mathematical operation by means of the CPU by using the programs (data analysis section and data estimation section) read from the memory, and executes an analysis and estimation of the detection value to be described later on the basis of a result of the mathematical operation.

The data analysis section 61 analyzes the detection values detected by the distance detector 5 and classifies the detection values into a plurality of detection value groups. The detection value is a value of data of the distance from the distance detector 5 to the object 21. For example, the data analysis section 61 classifies distance data items into a plurality of distance data groups according to presence/absence of time-series consecutiveness (hereinafter referred to as continuity of detection values) of the detection values detected by the distance detector 5.

When carrying out such classification, the data analysis section 61 determines that the detection values have no continuity when the variation in the detection value detected by the distance detector 5 is a variation a variation range of which lies astride a predetermined threshold (hereinafter referred to as a reference value). That is, the data analysis section 61 classifies (divides) the detection value group before and after the detection value exceeds the reference value. Alternatively, the data analysis section 61 determines that there is no continuity when the variation in the detection value detected by the distance detector 5 is a variation exceeding a predetermined coefficient of variation (hereinafter referred to as a reference variation coefficient). That is, the data analysis section 61 classifies (divides) the detection value group before and after the coefficient of variation of the detection value exceeds the reference variation coefficient. The coefficient of variation of the detection value is an index indicating a ratio of the variation in the current detection value to the immediately preceding detection value. The coefficient of variation and reference variation coefficient are set in advance according to the optical characteristics of the to-be-detected section 9 to be described later and are stored in a storage device (nonvolatile memory). These values are read by the data analysis section 61 as analysis parameters when the detection values are classified into a plurality of detection value groups.

The data estimation section 62 estimates a detection value group of the article 2 from the plurality of detection value groups on the basis of the classification determined by the data analysis section 61. In other words, the data estimation section 62 classifies the detection value groups into the detection value group of the article 2 and detection value groups of the members of the object 21 other than the article 2 by estimation. The article 2 in this case is an article 2 (as an example, article 2a shown in FIG. 1) actually being picked by the robot arm. The detection value group is an aggregate (distance data group) of data items of distances from the distance detector to the object 21. That is, the data estimation section 62 estimates a distance data group indicating the article 2 within the range (search range) of matching with the master data according to such classification. The master data is a reference detection value group (reference distance data group) achieved by previously acquiring the distance data to be obtained when the distance from the distance detector 5 fixed at the reference position P1 to the article 2 is detected by the distance detector 5 at the time when the picked article 2 passes through the distance detection position P2 on the movement locus for all the articles 2 included in the article group 2s of the collection area 20. It should be noted that in this embodiment, although it is assumed that the data estimation section 62 does not carry out matching of the detection value group with the master data, it is also possible for the data estimation section 62 to carry out the matching.

In order to facilitate classification of distance data items to be carried out by the data analysis section 61 and estimation of a distance data group indicating the article 2 to be carried out by the data estimation section 62, the end effector has the following configuration. As shown in FIG. 1, the end effector 33 is configured to include a gripping mechanism 8 and to-be-detected section 9.

The griping mechanism 8 grips the article 2 in a releasable manner. Gripping is specified as a concept comprehending the whole of holding modes of the article 2 such as suction-attraction, pinching or the like. In this embodiment, as an example, the end effector 33 carries out suction (suction-attraction) and release of the article 2 by means of air. Accordingly, the gripping mechanism 8 is configured to include a base section, suction-attracting section, vacuum generator, compressor, electromagnetic valve, pressure sensor (their illustrations omitted), and the like. The base section is attached to the arm apical end section 36 of the robot arm 3. The suction-attracting section is arranged on the side of the base section opposite to the side at which the base section is attached to the arm apical end section 36, suction-attracts the article 2 by being internally evacuated by the vacuum generator, and releases the article 2 by being internally vacuum-broken (by being opened to the atmosphere). The vacuum generator is connected to the compressor through the electromagnetic valve and carries out suction/blowing of air from/into the inside of the suction-attracting section. The electromagnetic valve controls the suction and blowing of air to be carried out by the vacuum generator by opening/closing of the valve. The pressure sensor is provided between the suction-attracting section and vacuum generator and measures the internal pressure (adsorption pressure of the article 2) of the suction-attracting section. Operations of all the vacuum generator, compressor, electromagnetic valve, and pressure sensor are controlled by control signals received from the arm control section 4.

The to-be-detected section 9 is one of the members of the object 21 to be irradiated with the incident light 50 from the distance detector 5 and, in short, is one of the members of the object 21 which is a distance detection (measurement) object of the distance detector 5 and is arranged at the boundary between the article 2 and gripping mechanism 8 or in the vicinity of the boundary. Regarding the to-be-detected section 9, the detection value group indicating the detection result of the distance from the distance detector 5 to the to-be-detected section 9 to be detected by the distance detector 5 has optical characteristics different from the detection value group indicating the distance from the distance detector 5 to the article 2 to be detected by the distance detector 5. In such optical characteristics, both of an optical characteristic which can be detected by the distance detector 5 and optical characteristic which cannot be detected (in other words, an abnormal value is detected) by the distance detector 5 are included. For example, the optical characteristic is one of a far distance (infinity), absorption, and variation. In this case, the detection value group of the to-be-detected section 9 becomes values indicating one of the optical characteristics of infinity, absorption, and variation. Further, regarding the optical characteristic, for example, a case where the reflectance of the reflected light of, for example, the incident light (laser light) 50 at the to-be-detected section 9 is extremely high or is extremely low in comparison with the reflectance of the reflected light of the incident light (laser light) 50 at the article 2, case where the variation period of the reflectance is short, case where the range of variation in the reflectance is large, and the like can be mentioned. For example, when there is a case where the reflectance of the reflected light is higher than a predetermined upper limit, the case corresponds to the to-be-detected section 9 having optical characteristics in which the reflectance is extremely high. Further, when there is a case where the reflectance of the reflected light is lower than a predetermined lower limit, the case corresponds to the to-be-detected section 9 having optical characteristics in which the reflectance is extremely low. It is sufficient if these upper limit and lower limit are set in such a manner that these values can easily be distinguished from the reflectance of the reflected light at the article 2 according to the above reflectance.

The to-be-detected section 9 may be any type of member, so long as the member has such optical characteristics and is constituted of, for example, a mirror, blackbody, member a surface shape of which differs from the surface shape of the article 2 (hereinafter referred to as an atypical body) or the like. The atypical body is, for example, a member or the like the surface of which forms a convex/concave shape on a predetermined cycle. When the to-be-detected section 9 is made a mirror, the detection value group of the distance detected by the distance detector 5 approximates to a value indicative of a far distance. In this case, reflection of the incident light (laser light) 50 at the mirror resembles the radiation toward the sky, and hence the detection value group of the distance to the mirror approximates to a value indicative of a far distance which corresponds to the detection value group of the sky. When the to-be-detected section 9 is made a blackbody, the detection value group of the distance detected by the distance detector 5 becomes a value indicative of absorption (abnormal value making distance detection impossible). In this case, the incident light (laser light) 50 from the distance detector 5 is hardly reflected and is absorbed by the to-be-detected section 9, and hence distance detection is made impossible. That is, a state where the amount of light is saturated or state where the reflected light of the incident light (laser light) 50 from the distance detector 5 cannot be obtained is brought about, and the obtained value becomes a non-numeric value. When the to-be-detected section is made an atypical body, the detection value group of the distance detected by the distance detector 5 becomes, for example, a value indicative of a variation of a short period or value having a large range of variation.

It is sufficient if one of these types of to-be-detected sections 9 is selected and applied according to the figure of the article 2 included in the article group 2s. For example, when an article the surface color (including wrapping color and painting color) of which is black is included in the article group 2s, not a blackbody but a mirror or atypical body is applied as the to-be-detected section 9. Alternatively, when an article the surface shape (including the surface shape or the like of the wrapping paper) of which is a convex/concave shape is included in the article group 2s, not an atypical body but a mirror or blackbody is applied as the to-be-detected section 9.

The operations and functions of the robot arm 3 and distance detector 5 at the time of detection of the distance from the distance detector 5 to the object 21 (gripping mechanism 8, to-be-detected section 9, article 2, and air) to be carried out by the distance detector 5 will be described below according to the control flows of the arm control section 4 and detector control section 6. In FIG. 3, a control flow of the arm control section 4 for the robot arm 3, and control flow of the detector control section 6 for the distance detector 5 are shown, i.e., estimation processing of the distance data group indicating the article 2 is shown.

First, the robot arm 3 carries out picking of the article 2 (article 2a in FIG. 1) from the collection area 20. For this purpose, the arm control section 4 makes the arm section 32 of the robot arm 3 operate to grip the article 2 (S101). In this embodiment, the end effector 33 is operation-controlled by the arm control section 4, and the gripping mechanism 8 suction-attracts the article 2. At that time, an article 2 to be suction-attracted by the gripping mechanism 8 (suction-attracting section) is selected from the article group 2s collected in the collection area 20. Then, the arm control section 4 causes the arm section 32 to operate to make the gripping mechanism 8 (suction-attracting section) descend toward the selected article 2, makes the vacuum generator, compressor, and electromagnetic valve operate, and makes the suction-attracting section suction-attract the article 2.

After making the gripping mechanism 8 (suction-attracting section) suction-attract the article 2, the arm control section 4 makes the arm section 32 operate in such a manner that each of the members of the object 21 including the article 2 passes through the distance detection position P2 (S102). In this embodiment, as an example, the arm section 32 lifts the article 2 from the collection area 20 in the vertical direction to a predetermined height. In this case, the distance detection position P2 is set at an arbitrary position above the collection area 20 and equal to or lower than a predetermined height (see FIG. 1). Whether or not the article 2 has been suction-attracted by the gripping mechanism (suction-attracting section) is determined by the arm control section 4 on the basis of, for example, the internal pressure (adsorption pressure of the article 2) of the suction-attracting section measured by the pressure sensor.

When the object 21 passes through the distance detection position P2, the detector control section 6 makes the distance detector 5 operate to detect (measure) the distance from the distance detector 5 to each of the members of the object 21 including the article 2 (S103). In this case, the members of the object 21 pass (upwardly) through the distance detection position P2 in the order of the gripping mechanism 8, to-be-detected section 9, article 2, and air. Accordingly, the distance detector 5 measures the distance from itself to each of the gripping mechanism 8, to-be-detected section 9, article 2, and air in the order mentioned.

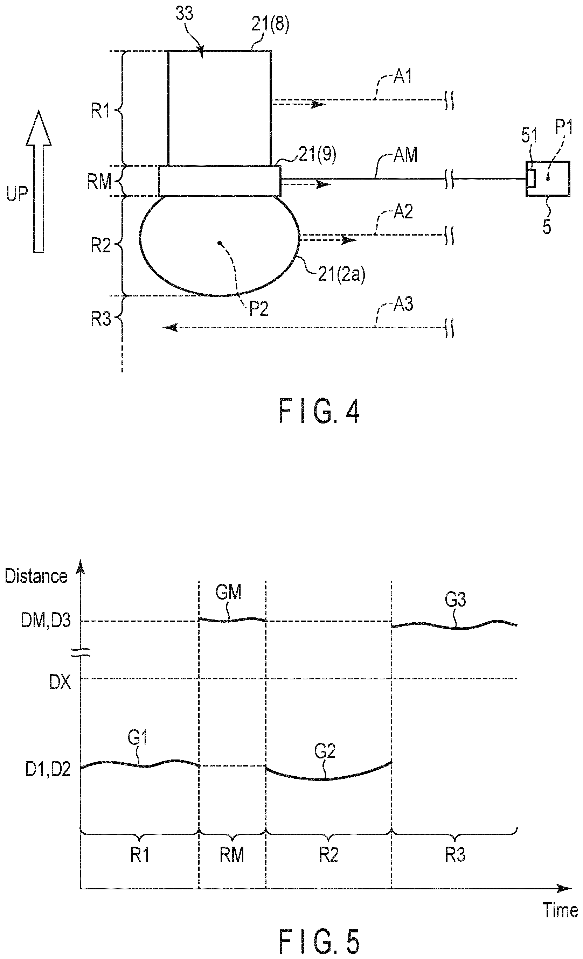

In FIG. 4, an example of a distance data detection mode adopted by the distance detector 5 is shown. In this case, the distance detector 5 acquires the distance data in the order of the area R1, area RM, area R2, and area R3. The area R1, area RM, area R2, and area R3 respectively correspond to the incident light (laser light)-reception areas in the gripping mechanism 8, to-be-detected section 9, article 2 (2a), and air. It should be noted that as the to-be-detected section 9, a mirror is applied as an example. When each of the members of the object 21 including the article 2a ascends as indicated by the arrow UP, the laser light emitted from the distance detector 5 is reflected in the area R1 as indicated by the arrow A1, is reflected in the area RM as indicated by the arrow AM, is reflected in the area R2 as indicated by the arrow A2, and is reflected in the area R3 as indicated by the arrow A3. The distance detector 5 acquires distance data in each of the areas R1, RM, R2, and R3 on the basis of the reflection modes of the laser light indicated by the arrows A1, AM, A2, and A3.

After the distance data acquisition by the distance detector 5, the detector control section 6 analyzes the distance data. In this embodiment, the data analysis section 61 analyzes the distance data (detection value detected by the distance detector 5) to classify (divide) the distance data into a plurality of distance data groups (S104).

In FIG. 5, an acquired result (time transition of distance data) of distance data at the distance detector 5 corresponding to the reflection modes of the laser light shown in FIG. 4 is shown. As shown in FIG. 5, the distance data in each of the areas R1, RM, R2, and R3 has time-series consecutiveness, i.e., continuity. Conversely, in the distance data between areas, the continuity is cut off. That is, between the area R1 and area RM, the distance data value abruptly increases from D1 to DM to exceed a reference value DX. Further, between the area RM and area R2, the distance data value abruptly lowers from DM to D2 to become less than the reference value DX. Further, between the area R2 and area R3, the distance data value abruptly increases from D2 to D3 to exceed the reference value DX. It should be noted that the distance data values D1, DM, D2, and D3 are respectively the representative values in the areas R1, RM, R2, and R3, and the distance data in each area is a value in the vicinity of each representative value.

Accordingly, the data analysis section 61 classifies (divides) the distance data acquired by the distance detector 5 into distance data groups G1, GM, G2, and G3 in the areas R1, RM, R2, and R3 according to the variation mode based on the reference value DX. It should be noted that, in this case, the data analysis section 61 may classify the distance data according to the variation mode based on the reference variation coefficient.

After the distance data is classified by the data analysis section 61 into the distance data groups G1, GM, G2, and G3, the detector control section 6 estimates the distance data group of the article 2 (2a) from these distance data groups G1, GM, G2, and G3 (S105). In this embodiment, as an example, the data estimation section 62 classifies (divides) the distance data into the distance data group G2 of the article 2a and distance data groups G1, GM, and G3 of the members of the object 21 other than the article 2a. The distance data obtained by the distance detector 5 is acquired in the order of the area R1, area RM, area R2, and area R3, and the distance data of the article 2a corresponds to the area R2. Accordingly, the data estimation section 62 estimates, from among the distance data groups, the distance data group G2 of the area R2 interposed between the distance data groups GM and G3 of the area RM and area R3, and is separated from these distance data groups GM and G3 to be the distance data group indicating the article 2a. That is, thereby, the distance data group G2 of the area R2 is estimated to be the distance data group indicating the article 2a being within the range of matching with the master data.

Upon completion of the estimation of the distance data group indicating the article 2a, the data estimation section 62 terminates the estimation processing. Then, for example, when the article 2a which has been gripped is released, and another article 2 is picked from the collection area 20, the arm control section 4 and detector control section 6 carry out the control from S101 to S105 again.

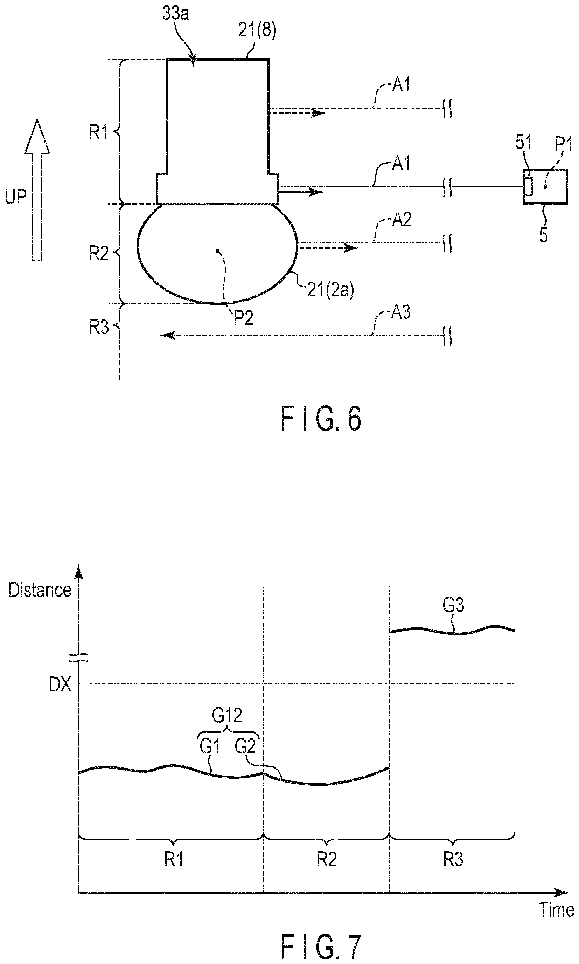

As described above, according to the picking system 1 of this embodiment, the end effector 33 of the robot arm 3 is provided with the to-be-detected section 9, and hence the following effect is exhibited as compared with the comparative example shown in FIG. 6.

In FIG. 6, the configuration of an end effector 33a of a robot arm 3 according to a comparative example, and state where an article 2 (2a) is suction-attracted by the end effector 33a are shown. As shown in FIG. 6, the end effector 33a of the comparative example is not provided with a to-be-detected section (see FIG. 4). However, the other configurations in the comparative example excluding the to-be-detected section 9 are identical to this embodiment. Accordingly, the configurations identical to this embodiment (FIG. 4) are denoted by reference symbols identical to this embodiment on the drawing.

In the comparative example, the distance detector 5 detects (measures) the distances from itself to the gripping mechanism 8, article 2a, and air in the order named. In the detection mode of distance data shown in FIG. 6, the distance detector 5 acquires distance data in the order of the area R1 (gripping mechanism 8), area R2 (article 2a), and area R3 (air). In FIG. 7, an acquired result (time transition of distance data) of the distance data at the distance detector 5 corresponding to the reflection modes of the laser light shown in FIG. 6 is shown. As shown in FIG. 7, the distance data in each of the areas R1, R2, and R3 has time-series consecutiveness, i.e., continuity. Further, in the distance data between the area R2 and area R3, the continuity is cut off. However, the distance data between the area R1 and area R2 has time-series consecutiveness, i.e., continuity although slight variation is found therein.

In the comparative example too, as in the case of this embodiment described above, the distance data obtained by the distance detector 5 is acquired in the order of the area R1, area R2, and area R3, and the distance data of the article 2a corresponds to the area R2. However, in the comparative example, the to-be-detected section 9 is not provided, and hence the distance data value does not abruptly increase to exceed the reference value DX between the area R1 and area R2, and the continuity of the distance data between these areas is not cut off.

Accordingly, the distance data acquired by the distance detector 5 is only classified into the distance data group G12 in the areas R1 and R2, and distance data group G3 in the area R3. That is, it is not possible to classify the distance data into the distance data groups G1, G2, and G3 in the areas R1, R2, and R3. As a result, it is not possible to classify (divide) the distance data into the distance data group indicating the article 2 and distance data group indicating the members of the object 21 other than the article 2.

Conversely, in this embodiment, the end effector 33 is provided with the to-be-detected section 9 as described above, and hence it is possible to interpose the distance data group GM in the area RM (to-be-detected section 9) between the distance data group G1 in the area R1 (gripping mechanism 8) and distance data group G2 in the area R2 (article 2a). Thereby, it is possible to cut off the continuity of the distance data between the area R1 and area R2.

Therefore, according to this embodiment, it is possible to classify (divide) the distance data into the distance data group indicating the article 2 and distance data groups indicating the members of the object 21 other than the article 2. Thereby, for example, in the subsequent step, when the distance data is compared (matched) with the master data, the distance data group (as an example, the distance data group G2 indicating the article 2a) indicating the article 2 is estimated, and hence it is possible to narrow down the matching range (search range). As a result of this narrowing, it is possible to carry out matching more quickly and more efficiently and, by extension, it becomes possible to carry out estimation (specification) of the article 2 more quickly and more efficiently.

In this embodiment, matching is not carried out, and hence although the article 2 is not specified, the distance data group indicating the article 2 is estimated. Accordingly, by analyzing such a distance data group, it is possible to estimate the shape and size of the picked article 2 (as an example, article 2a shown in FIG. 1). Accordingly, for example, when the picked article 2 is released, it becomes possible to release the article 2 at a most appropriate place or height on the basis of the estimated shape and size. Thereby, it is possible to attempt prevention of breakage or the like of the article 2 at the time of release.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

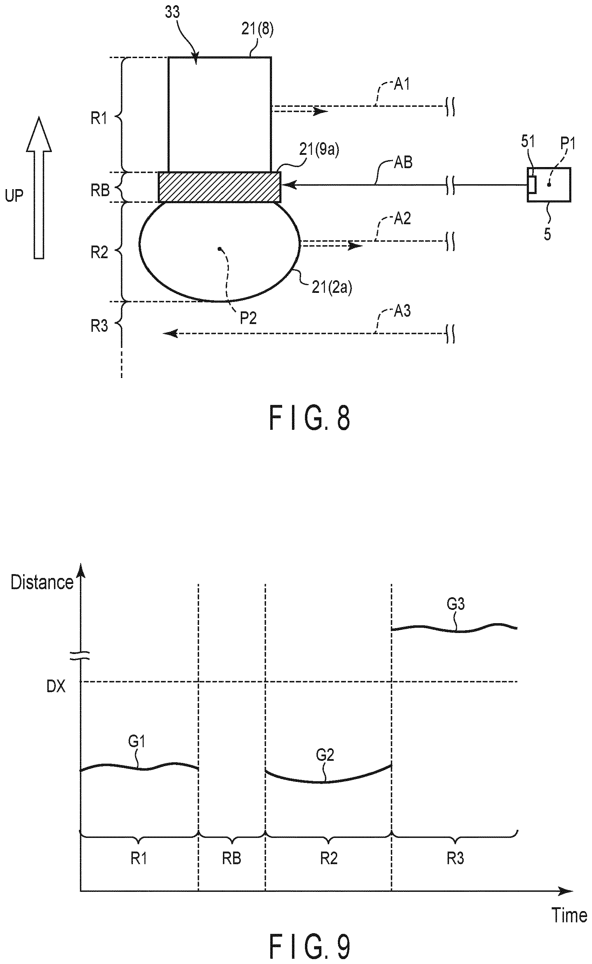

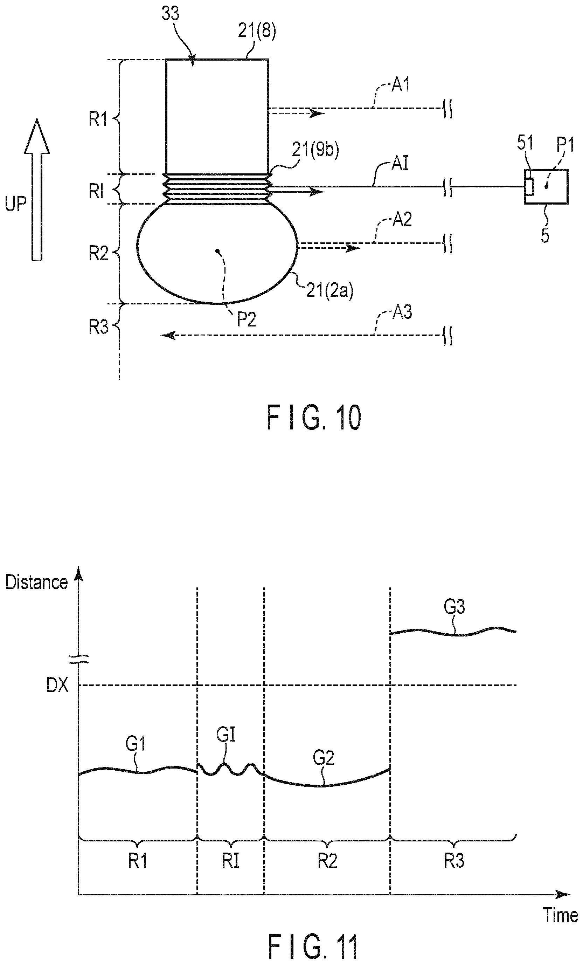

In this embodiment, although a mirror is applied as the to-be-detected section 9, as described above, the to-be-detected section 9 may also be a blackbody or atypical body. Hereinafter, an embodiment in which a blackbody is applied will be described below as a first modification example (FIG. 8 and FIG. 9), and embodiment in which an atypical body is applied will be described below as a second modification example (FIG. 10 and FIG. 11).

In FIG. 8, an example of a detection mode of distance data carried out by the distance detector 5 of a case where the to-be-detected section 9a is made a blackbody is shown. In FIG. 9, an acquired result of distance data at the distance detector 5 corresponding to the reflection modes of the laser light shown in FIG. 8 is shown. Likewise, in FIG. 10, an example of a detection mode of distance data of a case where the to-be-detected section 9a is made an atypical body. In FIG. 11, an acquired result of distance data corresponding to the reflection modes of the laser light shown in FIG. 10 is shown. It should be noted that the other configurations excluding the to-be-detected sections 9a and 9b in the first modification example and second modification example are identical to this embodiment. Accordingly, configurations identical to this embodiment (FIG. 4) are denoted by reference symbols identical to this embodiment on the drawing.

As shown in FIG. 8 and FIG. 9, when the to-be-detected section 9a is made a blackbody, the laser light radiated from the distance detector 5 is not reflected in the area RB (blackbody) as indicated by the arrow AB and is almost totally absorbed. Accordingly, the distance data in the area RB becomes an abnormal value (approximately zero) making distance detection impossible. In this case, the distance data value abruptly decreases to become less than the reference value DX between the area R1 and area R2, and hence it is possible to cut off the continuity of the distance data between these areas. Thereby, it is possible to separate the distance data group G2 of the area R2 (article 2a) and distance data group G1 of the area R1 (gripping mechanism 8) from each other.

Further, as shown in FIG. 10 and FIG. 11, when the to-be-detected section 9b is made an atypical body, the laser light radiated from the distance detector 5 is reflect in the area R1 (atypical body) as indicated by the arrow AI. Accordingly, the distance data value in the area R1 becomes a value finely varying with a fixed period. In this case, the distance data value does not abruptly vary between values above and below the reference value DX at a part between the area R1 and area R2 and continuity of the distance data between these areas is not cut off. However, the distance data group GI in the area R1 (atypical body) is detected in the mode obviously different from the distance data group G2 in the area R2 (article 2a). Accordingly, the distance data group GI of the area RI is interposed between the area R1 and area R2, whereby it possible to separate the distance data group G2 of the area R2 (article 2a) and distance data group G1 of the area R1 (gripping mechanism 8) from each other.

It should be noted that in this embodiment, first modification example, and second modification example which are described above, although the end effectors 33 (gripping mechanism 8) are respectively provided with the to-be-detected sections 9, 9a, and 9b, in place of providing these sections, for example, the surface of the gripping mechanism 8 (base section, suction-attracting section, and the like) may be mirrored or the surface thereof may also be painted black. In this case, the mirrored part or black-painted part corresponds to the to-be-detected section.

Further, in this embodiment, first modification example, and second modification example which are described above, although the gripping mechanism 8 of the end effector 33 is made a suction-attracting mechanism, the gripping mechanism 8 may also be made a pinching mechanism configured to carry out pinching and release of the article 2 by means of, for example, a plurality of fingers (claws). In this case, it is sufficient if a mirror, blackbody, atypical body or the like is arranged in the vicinity of each of tips of the fingers (claws) as the to-be-detected section.

It should be noted that in this embodiment, first modification example, and second modification example which are described above, the distances to the members of the object 21 including the article 2 are detected (measured) and the distance data is classified into a plurality of distance data groups. In place of the above, the surface shapes of the members of the object 21 may be detected from, for example, the distance data and the data of the surface shapes may be classified into a plurality of surface shape data groups.

### Reference Signs List

- 1 ...: Picking system
- 2, 2a ...: Article
- 2s ...: Article group
- 3 ...: Robot arm
- 4 ...: Arm control section
- 5 ...: Distance detector
- 6 ...: Detector control section
- 7 ...: Installation surface
- 8 ...: Gripping mechanism
- 9, 9a, 9b ...: To-be-detected section
- 11 ...: Picking robot
- 12 ...: Distance detecting device
- 20 ...: Collection area
- 21 ...: Object
- 31 ...: Base stand section
- 32 (32a to 32e) ...: Arm section
- 33, 33a ...: End effector
- 34 (34a to 34e) ...: Articulation section
- 35a to 35g ...: Axes
- 36 ...: Arm apical end section
- 50 ...: Incident light (laser light)
- 51 ...: Laser light radiation perceiving section
- 61 ...: Data analysis section
- 62 ...: Data estimation section
- D1, D2, D3, DM ...: Distance data values
- DX ...: Reference value
- G1, G2, G3, G12, GI, GM ...: Distance data group
- P1 ...: Reference position
- P2 ...: Distance detection position

## Claims

1. An end effector of a robot arm comprising:
a gripping mechanism attached to an arm apical end section of the robot arm configured to carry out picking of an article, and configured to grip the article in a releasable manner; and
a to-be-detected section arranged at a boundary between the article and the gripping mechanism or in the vicinity of the boundary and is irradiated with incident light from a distance detector configured to detect a distance from itself to an object on the basis of optical characteristics of reflected light corresponding to the irradiated incident light, wherein
regarding the to-be-detected section, a detection value group indicating a detection result of a distance from the distance detector to the to-be-detected section to be detected by the distance detector possesses optical characteristics different from a detection value group indicating a distance from the distance detector to the article to be detected by the distance detector.

2. The end effector of the robot arm of claim 1, wherein
the detection value group of the to-be-detected section is values indicating one of optical characteristics of a far distance, absorption, and variation.

3. The end effector of the robot arm of claim 1, wherein
the to-be-detected section is one of a mirror, a blackbody, and a member a surface shape of which differs from a surface shape of the article.

4. A picking system comprising:
a robot arm configured to carry out picking of an article by means of an end effector attached to an arm apical end section thereof;
an arm control section configured to control an operation of the robot arm;
a distance detector configured to detect each of distances from the distance detector to members of an object including the article on the basis of optical characteristics of reflected light corresponding to irradiated incident light on a movement locus of the article picked by the robot arm to be obtained after the robot arm has carried out picking of the article; and
a detector control section configured to control an operation of the distance detector, wherein
the end effector includes
a gripping mechanism configured to grip the article in a releasable manner, and
a to-be-detected section arranged at a boundary between the article and the gripping mechanism or in the vicinity of the boundary and is irradiated with the incident light from the distance detector,
regarding the to-be-detected section, a detection value group indicating a detection result of a distance from the distance detector to the to-be-detected section to be detected by the distance detector possesses optical characteristics different from a detection value group indicating a distance from the distance detector to the article to be detected by the distance detector, and
the detector control section classifies detection values detected by the distance detector into a detection value group of the article and detection value groups of members of the object other than the article on the basis of a detection value group of the to-be-detected section.

5. The picking system of claim 4, wherein
the detector control section includes
a data analysis section configured to analyze the detection values and classify the detection values into a plurality of detection value groups, and
a data estimation section configured to estimate a detection value group of the article from the plurality of detection value groups on the basis of the classification carried out by the data analysis section.

6. The picking system of claim 5, wherein
the data analysis section classifies the detection values into the plurality of detection value groups according to presence/absence of continuity of the detection values.

7. The picking system of claim 6, wherein
the data analysis section determines that there is no continuity when a range of the variation in the detection value lies astride a predetermined threshold.

8. The picking system of claim 6, wherein
the data analysis section determines that there is no continuity when the variation in the detection value is a variation exceeding a predetermined coefficient of variation.

9. The picking system of claim 4, wherein
the distance detector is a laser range finder configured to oscillate laser light, radiate the laser light toward the object, and perceive the laser light bouncing back from the object.

10. The picking system of claim 9, wherein
the to-be-detected section possesses the optical characteristics in which a reflectance of reflected light of the laser light radiated from the laser range finder at the to-be-detected section is higher than a predetermined upper limit or is lower than a predetermined lower limit in comparison with a reflectance of reflected light of the laser light at the article.
